(19) Europäisches Patentamt / European Patent Office / Office européen des brevets

(11) **EP 2 577 089 B1**

(12) **EUROPEAN PATENT SPECIFICATION**

(45) Date of publication and mention
of the grant of the patent:
**28.11.2018 Bulletin 2018/48**

(51) Int Cl.:
***F16F 3/04*** (2006.01)

(21) Application number: **11717794.9**

(22) Date of filing: **10.03.2011**

(86) International application number:
**PCT/US2011/027969**

(87) International publication number:
**WO 2011/149579 (01.12.2011 Gazette 2011/48)**

(54) **PRELOADED DUAL-SPRING ASSEMBLY**

VOERGESPANNTE DUAL FEDER ANORDNUNG

ENSEMBLE DOUBLE RESSORT PRÉCONTRAINT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2010 US 788501**

(43) Date of publication of application:
**10.04.2013 Bulletin 2013/15**

(73) Proprietor: **Renton Coil Spring Company
Renton, WA 98057 (US)**

(72) Inventor: **PEPKA, Charles, F.
Renton, WA 98057 (US)**

(74) Representative: **Hoffmann Eitle
Patent- und Rechtsanwälte PartmbB
Arabellastraße 30
81925 München (DE)**

(56) References cited:
**EP-A1- 0 520 928          EP-A1- 2 351 945
WO-A1-2009/022606     DE-U1- 29 514 552
US-A1- 2008 099 968**

## Description

### FIELD OF THE INVENTION

This invention relates generally to a dual-spring assembly for varying the combined resultant spring rate of the assembly as the dual springs are compressed, and more specifically to a shock absorber unit having the dual-spring assembly with a system for adjusting an amount of preload in one or both of the springs.

### BACKGROUND OF THE INVENTION

Conventional shock absorbers of the type used in vehicles, such as automobiles, typically include a shock damper and a compression spring. At least two parameters considered when designing shock absorbers include the weight of the vehicle and the probable range of driving speeds. Typically, the damping coefficient of the shock damper and the spring constant of a compression spring are often fixed and thus not adjustable once the shock absorber has been fully assembled. However, one or more of the following may affect the efficiency and operation of the shock absorber: the vehicle weight, the range of driving speeds, the terrain (e.g., uneven or rough terrain), steering requirements and the environment. While it is appreciated that a stiffer spring (*i.e.,* larger spring constant or spring rate) permits restoration of the spring to its original state quicker and easier after a deflection, it is also appreciated that a softer spring (*i.e.,* smaller or lower spring constant or spring rate) absorbs energy more easily. Over the years, much effort has been devoted to researching spring constants in an attempt to achieve higher stability and comfort when a vehicle is driven over uneven roads, at high speeds, or is subjected to harsh steering maneuvers. As a consequence, many conventional shock absorbers have a single compression spring with a spring constant selected to handle "average" road or terrain conditions, which are those conditions assumed to be encountered during use of a particular vehicle or type of vehicle.

Some conventional suspension or coil spring systems are described in U.S. Patent Nos. 5,263,695 and 7,350,774 and in U.S. Patent Publication Nos. 2002/0038929 and 2008/0099968. By way of example, the conventional spring system described in U.S. Patent No. 5,263,695 attempts to achieve a good level of comfort and a good level of behavior using two springs mounted in series around a shock absorber. The conventional spring system described in U.S. Patent No. 7,350,774 includes a mechanical spring combination having a large travel, with an initial low spring rate during an initial range of compression and developing a high spring force through a second, but shorter range of compression.

Further, EP 0 520 928 A1 relates to a suspension for a vehicle wheel comprising an elongated shock absorber with an elongated body and first and second abutments at opposite ends of the shock absorber. First and second coil compression springs are aligned with each other and surround the shock absorber with one spring bearing against a first abutment and the other spring bearing against the other abutment. A cup is disposed between the springs which is movable along the symmetry axis of the elongate shock absorber. Furthermore, a third abutment is provided to constitute a stopper for the cup movement to decouple one of the springs from the compression movement after a predetermined suspension.

However, typical dual-spring shock absorber arrangements are used as simply a progressive combination to avoid movement through the entire stroke of the springs in a large impact scenario.

### SUMMARY OF THE INVENTION

The present invention relates to dual-spring assembly that may be employed in cooperation with a damper unit to form a shock absorber. The spring rate of at least one of the springs is adjustable with a preload mechanism, which in turn is movable relative to the damper unit. Further, the dual-spring assembly includes at least two compression springs arranged in series and each having selected spring rates. The first spring primarily absorbs the energy of applied loads that are below a first amplitude of applied load. Once the applied loads exceed the first amplitude of applied load and once an amount of preload in the spring with the second spring rate is overcome, the dual-spring assembly operates with a lower "effective" spring rate to absorb the energy of applied loads that exceed the first amplitude of applied load (e.g., high impact loads, such as hitting a curb with a front wheel).

In accordance with an aspect of the invention, a dual-spring assembly for a shock absorber includes a first compression spring having a first spring rate; and a second compression spring having a second spring rate that may be lower, higher, or the same as the first spring rate, the second compression spring having an amount of preload, the first and second compression springs arranged in series and operable to have an effective spring rate for absorbing energy from an applied load after the applied load is large enough to overcome the amount of preload in the second compression spring. The combined effective spring rate of the springs, once the preload is overcome (i.e., both springs engaged) is lower than the spring rate of the first spring. This lower effective spring rate allows the vehicle to better deal with high amplitude impact occurrences that would otherwise be very disruptive to a completely progressive suspension with a high spring rate.

In accordance with another aspect of the invention, a shock absorber includes a piston-cylinder assembly having at least one piston movable within a cylinder at least partially filled with a fluid; and a dual-spring assembly having first and second compression springs arranged in series, the first compression spring having a first mean coil diameter relative to a first coil axis and a first spring rate, and the second compression spring having a second mean coil diameter relative to a second coil axis aligned substantially parallel with the first coil axis, the second compression spring includes a second spring rate, the second compression spring further includes an amount of preload such that it compresses only after the first spring reaches a certain load, wherein the first and second compression springs operate with a lower effective spring rate than that of the first spring alone for absorbing energy from an applied load after the applied load exceeds a load sufficient to overcome the amount of preload in the second compression spring.

In accordance with yet another aspect of the invention, a method of absorbing applied loads with a dual-spring assembly includes the steps of (1) arranging first and second compression springs in series about the body of a shock absorber; (2) absorbing energy from a first applied load primarily with the first compression spring when the first applied load is below a predetermined amplitude of applied load; and (3) absorbing energy from a second applied load primarily with the first and second compression springs operating in series when the second applied load is above the predetermined amplitude of applied load and after the second applied load overcomes an amount of preload in the second compression spring. The combined spring rate of the first and second springs being lower than that of the first spring.

## BRIEF DESCRIPTION OF THE DRAWINGS

Preferred and alternative embodiments of the present invention are described in detail below with reference to the following drawings:

> FIGURE 1 is schematic view of a shock absorber having a dual spring assembly that is adjustable by a preload system according to an embodiment of the present invention;
> FIGURE 2 is cross-sectional view of the dual-spring assembly of FIGURE 1 with the springs in free state;
> FIGURE 3 is a spring rate curve for at least one of the springs of the dual-spring assembly of FIGURE 1;
> FIGURE 4 is a spring rate curve for the dual-spring assembly of FIGURE 1 showing various regions and applied load thresholds relating to the operation of the dual-spring assembly according to an embodiment of the present invention; and
> FIGURE 5 is a schematic view of the shock absorber and preload system of FIGURE 1 with stop limiters of the preload system preventing further deflection of a lower spring according to an embodiment of the present invention.

## DETAILED DESCRIPTION OF THE PREFERRED EMBODIMENT

As will be described in further detail below, at least one embodiment of the invention includes a dual-spring assembly that may cooperate with a damper unit of a shock absorber. In addition, the shock absorber may include a preload system for preloading at least one of the springs. The dual springs are arranged in series. In one embodiment, the spring with the higher spring rate operates as the primary spring to absorb the energy from applied loads that are less than a desired amplitude of applied load. For loads greater than the desired amplitude of applied load and after the preload in the second spring has been overcome, the springs operate together with a lower effective spring rate to absorb high amplitude impact loads, for example. In another embodiment, the spring with the lower individual spring rate operates as the primary spring, with the higher rate spring being preloaded. However, even in this embodiment, the combined effective spring rate, once the preload is overcome and both springs are engaged, is lower than that of the primary spring. The primary spring in either case may also have a preload. However, the preload of the primary spring is less than that of the secondary spring such that the secondary spring is compressed only after compression of the primary spring to such an extent as to overcome the preload on the secondary spring. The preload system may include an interfacing bracket positioned between the springs. In the preferred embodiment, the interfacing portion is linearly movable to adjust the preload in at least one of the springs. For example, the interfacing portion may be coupled to a threaded collar and moved on a shock absorber body to increase or decrease the preload in one or both springs. Moreover, the preload system may include stops to limit the total compression of the preloaded spring.

The dual-spring system may be employed in a variety of applications ranging from a bicycle shock absorber to a vehicle suspension system to a suspension system for an interplanetary landing craft. The dual-spring system in combination with the preload system and optionally in combination with an auxiliary energy absorption member may advantageously provide numerous ways to customize and tune a shock absorber. By way of example, the dual-spring system in combination with the auxiliary energy absorption member permits the shock absorber to actively operate over at least three different spring rate regions. In addition, the preload system permits adjustment of the preload in one or both springs of the dual-spring system. Advantageously, preloading one or both springs may help stabilize the springs when installed and may alter an initial point at which the spring begins to further compress. For example, a spring preloaded by 100 pounds will not begin to compress under any applied load until such applied load is over 100 pounds. Optionally, preloading one or both of the springs may also provide improved tuning with respect to the dynamic response frequency of the system.

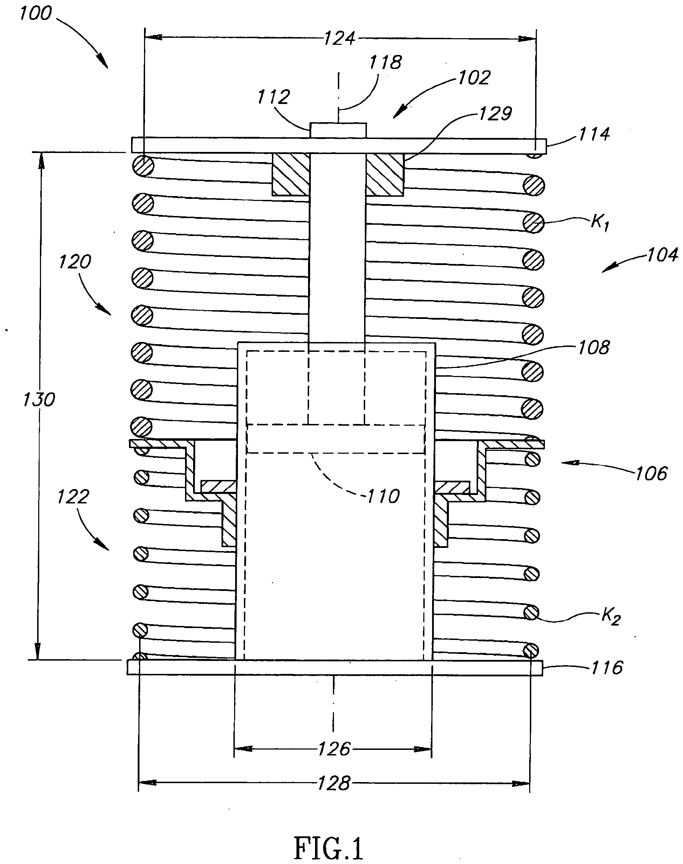

FIGURE 1 shows a shock absorber 100 having piston-cylinder damping assembly 102, which may also be referred to as a damper unit, a dual-spring assembly 104, and a preload system 106. The piston-cylinder assembly 102 includes a cylinder 108 sized to receive a piston 110, which in turn is coupled to a piston rod 112. The piston-cylinder assembly 102 may take the form of a conventional shock absorber, such as, but not limited to those described in U.S. Patent Nos. 7,478,708; 7,455,154; 7,441,640 and 5,263,695 and those described in U.S. Patent Publication No. 2002/0038929, all of which are incorporated herein by reference in their entireties. In one embodiment, an upper spring seat or upper support member 114 is fixed to the rod 112 and a lower spring seat or lower support member 116 is distally located from the upper support member 114, secured to the cylinder 108. In one embodiment, the lower support member 116 is adjustable relative to the cylinder 108 and may be used with the preload system 106 to adjust the amount of preload in one or both springs of the dual-spring assembly 104. It is appreciated the terms "upper" and "lower' as used herein are for reference purposes only. Further, the terms "upper" and "lower" merely orient the reader to the illustrated embodiment and they do not limit the invention to any particular spatial orientation or configuration.

The cylinder 108 defines a cylindrical axis 118 that coincides with a longitudinal axis of the piston rod 112. Accordingly, movement of the piston 110 occurs along a linear direction substantially parallel to the cylindrical axis 118. In one embodiment, the cylinder 108 is at least partially filled with a hydraulic fluid (not shown), such as, but not limited to oil. In another embodiment, the cylinder 108 may take the form of a gas charged cylinder filled at least partially with air or nitrogen to minimize aeration of the hydraulic fluid.

The dual-spring assembly 104 includes dual springs 120, 122 arranged in series, and more specifically the dual springs 120, 122 take the form of an upper spring 120 and a lower spring 122 according to an embodiment of the present invention. The springs 120, 122 may take the form of helical compression springs, which may include closed and ground end portions. The upper spring 120 includes a first mean coil diameter 124 that is larger than a cylinder diameter 126. Similarly, the lower spring 122 includes a second mean coil diameter 128, which is also larger than the cylinder diameter 126. The first and second mean coil diameters 124, 128 may be, but are not required to be, substantially equal. The dual springs 120, 122 may be formed from round-wire (*i.e.,* circular) having a desired wire diameter. In addition, the round-wire may take the form of steel wire and be heat treated, peened or otherwise processed to increase the strength and operational life of the springs 120, 122. An installed length 130 of the dual-spring assembly 104 may achieved by preloading one or both springs 120, 122, as will be discussed in greater detail below. For purposes of brevity, other structural aspects and features of compression springs, such as helical compression springs, will not be described in detail.

Optionally, the shock absorber 100 may include an energy absorption device 129 attached to the upper support member 114. The energy absorption device 129 may take the form of an elastomeric bumper, sleeve, stiff spring, or collar operable to engage the cylinder 108 before the upper spring 120 achieves a solid height, which may be otherwise referred to as "stacking out". The solid height is the length of a compression spring when under sufficient load to bring all coils into contact with adjacent coils such that no additional deflection of the compression spring is possible.

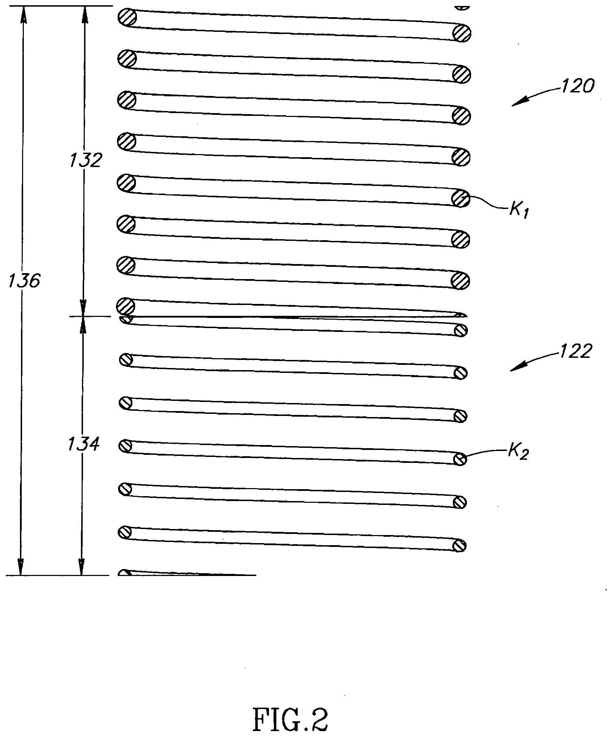

FIGURE 2 shows the upper spring 120 having a first free length 130 and the lower spring 122 having a second free length 132. The free length is the overall length of a spring when it is not under an applied load. The overall free length 136 is simply the free lengths 130 and 132 summed together when the springs 120, 122 are arranged in series. Further, the upper spring 120 includes a first spring rate or spring constant, $K_1$, and the lower spring 122 includes a second spring rate or spring constant, $K_2$. The spring rate is the change or gradient (*e.g.,* rate of inclination or slope) of the applied load on the spring per unit of deflection. The spring rate for a compression spring is generally given in units of force divided by units of distance, for example pounds per inch (lbf/in) or Kilograms per millimeter (Kg/mm). The spring rate reflects the stiffness of the spring and may be measured by measuring the spring's free length and then adding load (*e.g.*, weight) onto the spring. With each increment of added load, the change in length of the spring is measured. Linear springs maintain a constant rate of compression throughout their travel.

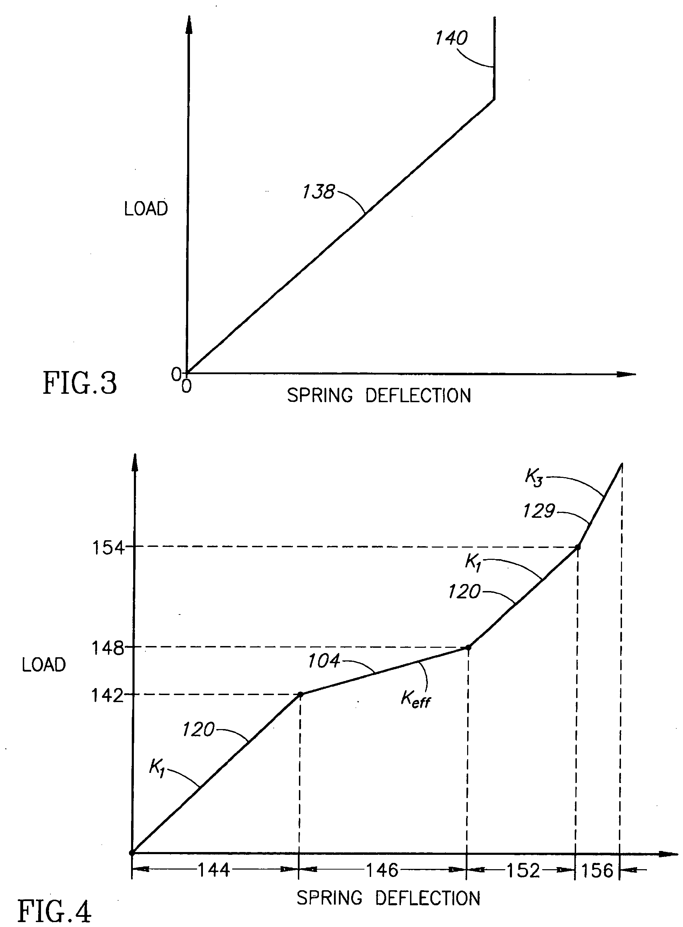

FIGURE 3 shows a non-preloaded, linear spring 138. The graphed spring rate of the linear spring 138 indicates that each load increment applied to the spring results in an incremental reduction in the length of the spring. By way of example if the spring 138 had a spring rate of 100 lbf/in then 100 pounds of compression force applied to the spring 138 would produce a reduction in the spring's length by one inch; 200 pounds of compression force applied to the spring 138 would produce a reduction in the spring's length by two inches, and so on until the spring 138 stacks out and reaches a solid height 140.

FIGURE 4 shows the spring assembly 104 in which the upper spring 120 includes a first spring rate $K_1$ and the lower spring 122 includes a second spring rate $K_2$. The upper spring may have a higher or lower spring rate than the lower spring, depending on the desired effective spring rate of the combination. One or both springs 120, 122 may also include an amount of preload. Referring briefly back to FIGURE 1, the installed length 130 may be achieved by inducing preload into the lower spring 122, the upper spring 120, or into both springs 120, 122, during or after installation. The amount of preload may be defined in terms of applied load or in terms of actual deflection (*i.e.,* change in spring length). Further, changing the amount of pre-load does not change the spring rate, meaning one does not obtain a stiffer spring by adding pre-load. Once the compression spring starts to compress it will change length in accordance with its spring rate (for constant rate springs).

In a preferred embodiment, the first spring rate $K_1$ of the upper spring 120 is substantially different than the second spring rate $K_2$ of the lower spring 122. Specifically, the first spring rate $K_1$ of the upper spring 120 is higher than the second spring rate $K_2$ of the lower spring 122 (*i.e.,* the upper spring 120 is stiffer than the lower spring 122). However, the reverse situation and other situations are possible depending on the type of springs used in the spring assembly 104. For example, the spring rate of the lower (secondary) spring 122 may be higher than that of the upper (primary) spring as long as the combined effective spring rate is lower than that of the upper spring. In addition, the energy absorption device 129 (FIGURE 1) may have a spring rate $K_3$ that operates to absorb energy during very high impact events and preferably after the upper spring 120 has been deflected by a maximum design amount, which may occur before the upper spring 120 reaches its solid height.

In operation, the upper spring 120 with the spring rate $K_1$ operates as the primary or active spring when the applied load on the dual-spring assembly 104 is below a first amplitude of applied load 142, for example during normal driving conditions for a specific type of vehicle. In the illustrated embodiment, the applied load 142 is equivalent to the preload induced in the lower spring 122. Concurrently while the upper spring 120 is active, the lower spring 122 may remain inactive or stated otherwise the lower spring 122 will not undergo a change in length while the applied loads remain below the first amplitude of applied load. Accordingly, FIGURE 4 shows an initial loading region 144 in which the upper spring 120 is active while the lower spring 122 remains inactive. In region 146 when the applied loads exceed the first amplitude of applied load 142, both springs 120, 122 are simultaneously active and thus operate with an effective spring rate, $K_{EFF}$. Because the springs 120, 122 are arranged in series, the effective spring rate $K_{EFF}$ is defined as follows:

$$K_{eff} = \left( \frac{1}{K_1} + \frac{1}{K_2} \right)^{-1}$$

By way of example, the dual-spring assembly 104 operates in the region 146 when the shock absorber 100 encounters a significant impact, such as a tire of a formula one race car running up onto a curb. Because the amplitude of the impact load exceeds the first amplitude of applied load 142, the springs 120, 122 operate together to absorb energy from the impact.

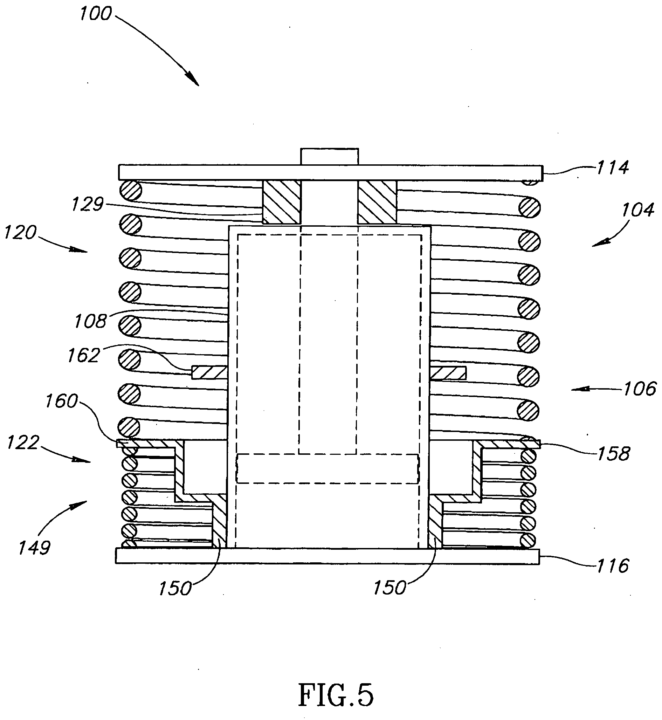

In the illustrated embodiment, the springs 120, 122 continue to operate together with the effective spring rate $K_{EFF}$ until the applied load exceeds a second amplitude of applied load 148. At this time and briefly referring to FIGURE 5, the lower spring 122 may achieve its solid height 149 or alternatively, a stop limiter 150 engages the lower support member 116 before the lower spring 122 achieves its solid height. The stop limiter 150 may take the form of a bumper device made from a variety of materials, such as, but not limited to polymeric materials, rubber materials, metals, and even fiber-reinforced composites materials. Contemporaneously, the lower spring 122 once again becomes inactive and the upper spring 120 absorbs the energy from the applied loads as indicated by region 152 in FIGURE 4. Preferably, the upper spring 120 is configured to avoid stacking out when the stop limiter 150 engages the lower support member 116 because this allows the dual-spring assembly 104 to continue to absorb energy even though the lower spring 122 has become inactive. In the event the applied load exceeds a third amplitude of applied load 154, which occurs when the upper spring 120 reaches a stacked out configuration or close thereto, the energy absorption device 129 (FIGURE 1) attached to the upper support member 114 engages the cylinder 108 and begins to absorb the energy from the applied load as indicated generally by region 156 of FIGURE 4. In the illustrated embodiment, the energy absorption device 129 (FIGURE 1) includes a spring rate $K_3$, which may be higher or lower than the spring rate $K_1$ of the upper spring 120. The energy absorption device may alternatively be a much stiffer spring either in place of the bumper so that it doesn't engage except under extreme compression of the springs in series, or it may be stacked in series with the other springs.

FIGURE 5 shows the dual-spring assembly 104 with the preload system 106 having a slidable bracket 158 secured about cylinder 108 with an interfacing portion 160 positioned between the upper and lower springs 120, 122, respectively. The slideable bracket 158 is sized to be received by the cylinder 108 and may include the stop limiters 150, discussed above. The bracket 158 may take a variety of forms and shapes as long as it slidably fits over the cylinder 108 and includes the interfacing portion 160 to separate the upper spring 120 from the lower spring 122.

In one embodiment, the slidable bracket 158 is a freely floating bracket that may be initially positioned during installation with a collar 162. During installation of the dual-spring assembly 104, the collar 162 may be moved along the cylinder 108 to adjust the amount of preload in one or both springs 120, 122. In one embodiment, the collar 162 may take the form of a threaded collar that is threadably engaged with an externally threaded cylinder 108. Further, the collar 162 may be located above or below the slidable bracket 158.

Advantageously, the dual-spring assembly 104 with or without the preload system 106 may be retrofitted to existing shock absorbers. In addition and as described above, the dual-spring assembly 104 permits the upper and lower springs 120, 122 to be de-coupled (*i.e.,* both springs active) once the applied load exceeds a certain threshold or level. Once de-coupled, the upper and lower springs 120, 122 operate together to provide a regressive spring rate, $K_{EFF}$ (FIGURE 4), which may allow for more energy absorption by the assembly 104 during high impact loading conditions. In addition, the dual-spring assembly 104 may advantageously be tuned before or after installation to achieve a desired suspension response based on a vehicle's chassis requirements.

In conclusion, the dual-spring assembly 104 allows for only a first spring to be active during normal operating conditions. When the vehicle encounters a large impact force, the first spring deflects by a desired amount and then begins to cooperate with a second spring to allow a shock absorber to absorb energy with a regressive or lower effective spring rate. Once the second spring deflects by a desired amount, preferably before stacking out, the second spring again becomes inactive while the first spring continues to absorb energy from the applied load.

## Claims

1. A dual-spring assembly (104) for a shock absorber, the dual-spring assembly comprising:

   a center assembly (102) having a first end (114) and a second end (116);
   a first compression spring (120) positioned about the center assembly (102) and extending from the first end of the center assembly (102), the first compression spring (110) having a first spring rate; and
   a second compression spring (122) positioned about the center assembly (102) and extending from the second end (116) of the center assembly (102), the second compression spring (122) having a second spring rate, the first and second compression springs (120, 122) arranged in series,

   **characterized by** the second compression spring (122) having a preloaded deflection and the first and second compression springs (120, 122) being operable to have an effective spring rate lower than the first spring rate for absorbing energy from an applied load after the applied load is large enough to overcome the preloaded deflection in the second compression spring (122).

2. The dual-spring assembly (104) of claim 1, wherein the first and second compression springs (120, 122) are helical compression springs and the center assembly (102) is a shock absorber assembly (100).

3. The dual-spring assembly (104) of claim 1, further comprising a preload adjustment system (106) having an interfacing portion (160) coupled to the center assembly (102) and located between the first and second compression springs (120, 122), the interfacing portion (160) movable to induce the preloaded deflection into at least the second compression spring (122).

4. The dual-spring assembly (104) of claim 1, wherein the first compression spring (120) continues to absorb the energy from the applied load after the second compression spring (122) deflects by a predetermined amount.

5. The dual-spring assembly (104) of claim 1, wherein at least one of the first and second compression springs (120, 122) are non-linear springs.

6. The dual-spring assembly (104) of Claim 1, wherein the center assembly (102) includes a shock absorber (100) having a piston-cylinder assembly with at least one piston (110) movable within a cylinder (108) at least partially filled with a fluid; and wherein the first compression spring (120) has a first mean coil diameter relative to a first coil axis, and the second compression spring (122) has a second mean coil diameter relative to a second coil axis aligned substantially parallel with the first coil axis.

7. The dual-spring assembly of claim 6, wherein the first and second mean coil diameters are sized to be larger than a periphery of the cylinder (108), the first helical compression spring (122) positioned around a first portion of the cylinder (108).

8. The dual-spring assembly of claim 6, wherein the first compression spring (120) is positioned around a first portion of the cylinder (108) and the second compression spring (122) is positioned around a second portion of the cylinder (108.

9. The dual-spring assembly of claim 6, further comprising a preload adjustment system (106) movable along a length of the cylinder (108) to change an amount of preload in at least the second compression spring (122).

10. The dual-spring assembly of claim 9, wherein the preload adjustment system (106) includes a collar (162) that threadably engages the cylinder (108).

11. The dual-spring assembly of claim 9, wherein the preload adjustment system (106) includes a bracket (158) with an interfacing portion (160) positioned between proximate ends of the first and second compression springs (129, 122).

12. The dual-spring assembly of claim 11, wherein the collar (162) cooperates with the bracket (158) to adjust the amount of preload in at least the second compression spring (122).

13. The dual-spring assembly of claim 6, further comprising a stop limiter slidably coupled to the cylinder, wherein the stop limiter (150) is sized to prevent the second compression spring (122) from achieving a solid height.

**Patentansprüche**

1. Doppelfederanordnung (104) für einen Stoßdämpfer, wobei die Doppelfederanordnung umfasst:

    eine Zentrumsanordnung (102) mit einem ersten Ende (114) und einem zweiten Ende (116); eine erste Druckfeder (120), die um die Zentrumsanordnung (102) herum positioniert ist und sich von dem ersten Ende der Zentrumsanordnung (102) erstreckt, wobei die erste Druckfeder (110) eine erste Federkonstante hat; und eine zweite Druckfeder (122), die um die Zentrumsanordnung (102) herum positioniert ist und sich von dem zweiten Ende (116) der Zentrumsanordnung (102) erstreckt, wobei die zweite Druckfeder (122) eine zweite Federkonstante hat, wobei die ersten und zweiten Druckfedern (120, 122) hintereinander angeordnet sind, **dadurch gekennzeichnet, dass** die zweite Druckfeder (122) eine vorgespannte Einfederung hat und die ersten und zweiten Druckfedern (120, 122) betriebsbereit sind, um eine wirksame Federkonstante zu haben, die niedriger ist als die erste Federkonstante, um Energie von einer aufgebrachten Last zu absorbieren, nachdem die aufgebrachte Last groß genug ist, um die vorgespannte Einfederung in der zweiten Druckfeder (122) zu überwinden.

2. Doppelfederanordnung (104) nach Anspruch 1, wobei die ersten und zweiten Druckfedern (120, 122) Schraubendruckfedern sind und die Zentrumsanordnung (102) eine Stoßdämpferanordnung (100) ist.

3. Doppelfederanordnung (104) nach Anspruch 1, weiter umfassend ein Vorspannungseinstellungssystem (106) mit einem Schnittstellenabschnitt (160), der mit der Zentrumsanordnung (102) verbunden und zwischen den ersten und zweiten Druckfedern (120, 122) angeordnet ist, wobei der Schnittstellenabschnitt (160) bewegt werden kann, um die vorgespannte Einfederung in zumindest der zweiten Druckfeder (122) herbeizuführen.

4. Doppelfederanordnung (104) nach Anspruch 1, wobei die erste Druckfeder (120) weiterhin die Energie von der aufgebrachten Last absorbiert, nachdem die zweite Druckfeder (122) um einen vorbestimmten Betrag einfedert.

5. Doppelfederanordnung (104) nach Anspruch 1, wobei zumindest eine von den ersten und zweiten Druckfedern (120, 122) nichtlineare Federn sind.

6. Doppelfederanordnung (104) nach Anspruch 1, wobei die Zentrumsanordnung (102) einen Stoßdämpfer (100) aufweist, der eine Kolben-Zylinder-Anordnung mit zumindest einem Kolben (110), der innerhalb eines Zylinders (108), der zumindest teilweise mit einem Fluid gefüllt ist, bewegt werden kann, aufweist; und wobei die erste Druckfeder (120) einen ersten mittleren Windungsdurchmesser bezüglich einer ersten Windungsachse hat und die zweite Druckfeder (122) einen zweiten mittleren Windungsdurchmesser bezüglich einer zweiten Windungsachse hat, die im Wesentlichen parallel zu der ersten Windungsachse ausgerichtet ist.

7. Doppelfederanordnung nach Anspruch 6, wobei die ersten und zweiten mittleren Windungsdurchmesser dimensioniert sind, um größer als ein äußerer Rand des Zylinders (108) zu sein, wobei die erste Schraubendruckfeder (122) um einen ersten Abschnitt des Zylinders (108) herum positioniert ist.

8. Doppelfederanordnung nach Anspruch 6, wobei die erste Druckfeder (120) um einen ersten Abschnitt des Zylinders (108) herum positioniert ist und die zweite Druckfeder (122) um einen zweiten Abschnitt des Zylinders (108) herum positioniert ist.

9. Doppelfederanordnung nach Anspruch 6, weiter umfassend ein Vorspannungseinstellungssystem (106), das entlang einer Länge des Zylinders (108) bewegt werden kann, um einen Vorspannungsbetrag in zumindest der zweiten Druckfeder (122) zu ändern.

10. Doppelfederanordnung nach Anspruch 9, wobei das Vorspannungseinstellungssystem (106) einen Kragen (162) aufweist, der mit dem Zylinder (108) in Gewindeeingriff steht.

11. Doppelfederanordnung nach Anspruch 9, wobei das Vorspannungseinstellungssystem (106) eine Klammer (158) mit einem Schnittstellenabschnitt (160) aufweist, der zwischen proximalen Enden der ersten und zweiten Druckfedern (129, 122) positioniert ist.

12. Doppelfederanordnung nach Anspruch 11, wobei der Kragen (162) mit der Klammer (158) zusammenwirkt, um den Vorspannungsbetrag in zumindest der zweiten Druckfeder (122) einzustellen.

13. Doppelfederanordnung nach Anspruch 6, weiter umfassend eine Anschlagsbegrenzung, die mit dem Zylinder verschiebbar verbunden ist, wobei die Anschlagsbegrenzung (150) dimensioniert ist, um zu verhindern, dass die zweite Druckfeder (122) eine feste Höhe erreicht.

**Revendications**

1. Ensemble à double ressort (104) pour un absorbeur de chocs, l'ensemble à double ressort comprenant :

   un ensemble central (102) ayant une première extrémité (114) et une seconde extrémité (116) ; un premier ressort de compression (120) positionné autour de l'ensemble central (102) et s'étendant depuis la première extrémité de l'ensemble central (102), le premier ressort de compression (110) ayant un premier taux de rappel ; et un second ressort de compression (122) positionné autour de l'ensemble central (102) et s'étendant depuis la seconde extrémité (116) de l'ensemble central (102), le second ressort de compression (122) ayant un second taux de rappel, les premier et second ressorts de compression (120, 122) disposés en série, **caractérisé par le fait que** le second ressort de compression (122) présente une déformation de précontrainte et que les premier et second ressorts de compression (120, 122) peuvent fonctionner pour avoir un taux de rappel effectif inférieur au premier taux de rappel pour absorber l'énergie d'une charge appliquée après que la charge appliquée est suffisamment grande pour surmonter la déformation de précontrainte dans le second ressort de compression (122).

2. Ensemble à double ressort (104) selon la revendication 1, dans lequel les premier et second ressorts de compression (120, 122) sont des ressorts de compression hélicoïdaux et l'ensemble central (102) est un ensemble absorbeur de chocs (100).

3. Ensemble à double ressort (104) selon la revendication 1, comprenant en outre un système d'ajustement de précontrainte (106) ayant une partie d'interfaçage (160) couplée à l'ensemble central (102) et situé entre les premier et second ressorts de compression (120, 122), la partie d'interfaçage (160) étant mobile pour induire la déformation de précontrainte dans au moins le second ressort de compression (122).

4. Ensemble à double ressort (104) selon la revendication 1, dans lequel le premier ressort de compression (120) continue d'absorber l'énergie provenant de la charge appliquée après que le second ressort de compression (122) a dévié d'une quantité prédéterminée.

5. Ensemble à double ressort (104) selon la revendication 1, dans lequel au moins l'un des premier et second ressorts de compression (120, 122) est un ressort non linéaire.

6. Ensemble à double ressort (104) selon la revendication 1, dans lequel l'ensemble central (102) inclut un absorbeur de chocs (100) ayant un ensemble piston-cylindre avec au moins un piston (110) mobile à l'intérieur d'un cylindre (108) au moins partiellement rempli d'un fluide ; et dans lequel le premier ressort de compression (120) a un premier diamètre de bobine moyen par rapport à un premier axe de bobine, et le second ressort de compression (122) a un second diamètre de bobine moyen par rapport à un second axe de bobine aligné essentiellement parallèle avec le premier axe de bobine.

7. Ensemble à double ressort selon la revendication 6, dans lequel les premier et second diamètres de bobines moyens sont dimensionnés pour être plus grands qu'une périphérie du cylindre (108), le premier ressort de compression hélicoïdal (122) étant positionné autour d'une première partie du cylindre (108).

8. Ensemble à double ressort selon la revendication 6, dans lequel le premier ressort de compression (120) est positionné autour d'une première partie du cylindre (108) et le second ressort de compression (122) est positionné autour d'une seconde partie du cylindre (108).

9. Ensemble à double ressort selon la revendication 6, comprenant en outre un système d'ajustement de précontrainte (106) déplaçable le long d'une longueur du cylindre (108) pour modifier une quantité de précontrainte dans au moins le second ressort de compression (122).

10. Ensemble à double ressort selon la revendication 9, dans lequel le système d'ajustement de précontrainte (106) inclut un collier (162) qui vient en prise par vissage avec le cylindre (108).

11. Ensemble à double ressort selon la revendication 9, le système d'ajustement de précontrainte (106) inclut un support (158) avec une partie d'interfaçage (160) positionnée entre des extrémités proches des premier et second ressorts de compression (129, 122).

12. Ensemble à double ressort selon la revendication 11, dans lequel le collier (162) coopère avec le support (158) pour ajuster la quantité de précontrainte dans au moins le second ressort de compression (122).

13. Ensemble à double ressort selon la revendication 6, comprenant en outre un limiteur d'arrêt couplé de manière coulissante au cylindre, dans lequel le limiteur d'arrêt (150) est dimensionné pour empêcher le second ressort de compression (122) d'atteindre une hauteur solide.

FIG.1

FIG.2

FIG.3

FIG.4

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5263695 A
- US 7350774 B
- US 20020038929 A
- US 20080099968 A
- EP 0520928 A1
- US 7478708 B
- US 7455154 B
- US 7441640 B